# EUROPÄISCHE PATENTSCHRIFT

(11) **EP 2 773 928 B1**
(45) Veröffentlichungstag und Bekanntmachung des Hinweises auf die Patenterteilung: **22.09.2021**
(21) Anmeldenummer: 12787369.3
(22) Anmeldetag: 31.10.2012
(51) Int. Cl.: G01J 3/28, G02B 3/00, G01J 3/36, G01J 3/51, G01J 3/02, G07D 7/12, G02B 19/00, G07D 7/121

(54) **SENSOR ZUR PRÜFUNG VON WERTDOKUMENTEN**
SENSOR FOR VERIFYING VALUE DOCUMENTS
CAPTEUR PERMETTANT DE VERIFIER DES DOCUMENTS DE VALEUR

(30) Priorität: 04.11.2011 DE 102011117678
(43) Veröffentlichungstag der Anmeldung: 10.09.2014
(73) Patentinhaber: Giesecke+Devrient Currency Technology GmbH, 81677 München (DE)
(72) Erfinder: DECKENBACH, Wolfgang, 83135 Schechen (DE); PHILIPP, Achim, 81369 München (DE); EHRL, Hans-Peter, 82515 Wolfratshausen (DE)
(86) Internationale Anmeldenummer: PCT/EP2012/004548
(87) Internationale Veröffentlichungsnummer: WO 2013/064245

(56) Entgegenhaltungen:
- EP-A1- 1 898 365
- US-A- 5 982 497
- US-A- 6 024 202
- US-B1- 6 222 631

## Beschreibung

Die Erfindung betrifft einen Sensor zur Prüfung von Wertdokumenten und eine Vorrichtung zur Prüfung von Wertdokumenten, die den Sensor aufweist.

Zur Prüfung von Wertdokumenten werden üblicherweise Sensoren verwendet, mit denen die Art der Wertdokumente bestimmt wird oder mit denen die Wertdokumente auf Echtheit oder auf ihren Zustand geprüft werden. Derartige Sensoren werden zur Prüfung von Wertdokumenten, wie z.B. Banknoten, Schecks, Ausweisen, Kreditkarten, Scheckkarten, Tickets, Gutscheinen und dergleichen verwendet. Die Prüfung der Wertdokumente erfolgt in einer Vorrichtung zur Wertdokumentbearbeitung, in der, je nach den zu prüfenden Wertdokumenteigenschaften, einer oder mehrere unterschiedliche Sensoren enthalten sind. Üblicherweise werden die Wertdokumente bei der Prüfung in einer oder mehreren Spuren abgetastet, wobei der Sensor und das Wertdokument relativ zueinander bewegt werden.

Die Wertdokumente werden häufig mit Hilfe optischer Sensoren geprüft, die das von dem jeweiligen Wertdokument ausgehende Licht erfassen. Um spektrale Informationen über das zu prüfende Wertdokument zu erhalten, wird das von einem beleuchteten Wertdokument ausgehende Licht mit Hilfe mehrerer Photodetektoren detektiert, die verschiedene spektrale Anteile des Lichts detektieren. Werden mehrere Photodetektoren seitlich zueinander versetzt hinter einer gemeinsamen Detektionsoptik angeordnet, wie es z.B. in der US6024202 beschrieben ist, so detektieren diese Detektionslicht, das von unterschiedlichen Detektionsbereichen auf dem zu prüfenden Wertdokument ausgeht. Bei Bildsensoren werden die unterschiedlichen Detektionsbereiche seitlich zueinander versetzter Photodetektoren bewusst ausgenutzt, um ein ortsaufgelöstes Bild des detektierten Objekts zu erhalten.

Um diesen seitlichen Versatz der verschiedenen spektralen Anteile auszuschließen ist es bekannt, im optischen Aufbau des Detektionsstrahlengangs ein Beugungsgitter oder teildurchlässige Strahlteiler einzubauen, durch welche verschiedene Anteile des von dem Wertdokument ausgesendeten Lichts auf verschiedene Photodetektoren gerichtet wird. Derartige Sensoren sind aus EP 1 898 365 A1 und US 5,982,497 A bekannt. Ein optischer Aufbau mit Beugungsgitter oder mit Strahlteilern erfordert jedoch einen beträchtlichen Bauraum.

Bisher wird die Messungenauigkeit, die aufgrund eines seitlichen Versatzes der Detektionsbereiche nebeneinander angeordneter Photodetektoren zustande kommt, entweder in Kauf genommen oder bei den detektierten Signalen nachträglich entfernt. Das nachträgliche Entfernen kann z.B., wie in der US6024202, mit Hilfe einer gezielten zeitlichen Verzögerung zwischen den von den Photodetektoren detektierten Signalen durchgeführt werden. Andere Sensoren kompensieren den seitlichen Versatz, nach der Umwandlung der optischen Signale in elektronische Signale, durch Übereinanderschieben der für die verschiedenen spektralen Anteile erhaltenen elektronischen Signale. Im Fall von zeitlich variierenden optischen Signalen kann eine Korrektur des Versatzes jedoch nicht einfach durch ein nachträgliches Übereinanderschieben der detektierten Signale erreicht werden. Denn aufgrund der zeitlichen Signaländerung wäre eine entsprechende Korrektur sehr komplex und deren Berechnung von der jeweiligen Anwendung, insbesondere von dem zu prüfenden Wertdokument abhängig.

Eine Aufgabe der vorliegenden Erfindung ist es daher, einen Sensor zur Prüfung von Wertdokumenten anzugeben, der einen kompakten Aufbau hat, der zum selben Zeitpunkt verschiedene spektrale Anteile des Detektionslichts getrennt voneinander detektieren kann und bei dem die Detektionsbereiche, in denen die verschiedenen spektralen Anteile zum selben Zeitpunkt detektiert werden, im Wesentlichen miteinander übereinstimmen.

Diese Aufgabe wird durch die Gegenstände der unabhängigen Ansprüche gelöst. In davon abhängigen Ansprüchen sind vorteilhafte Weiterbildungen und Ausgestaltungen der Erfindung angegeben.

Diese Aufgabe wird durch einen Sensor zur Prüfung von Wertdokumenten gelöst, der dazu ausgebildet ist, ein in einer Messebene des Sensors vorhandenes Wertdokument zu prüfen. Zur Prüfung eines Wertdokuments wird das Wertdokument in die Messebene gebracht, insbesondere in einen in der Messebene gelegenen Erfassungsbereich des Sensors. Der Sensor weist mindestens eine Lichtquelle auf zum Beleuchten des durch den Sensor zu prüfenden Wertdokuments und mindestens eine Detektionseinrichtung. Die Detektionseinrichtung ist zum Detektieren von Licht ausgebildet, das, beim Betreiben des Sensors, wenn das Wertdokument beleuchtet wird, von dem beleuchteten Bereich ausgeht.

Die Detektionseinrichtung weist mindestens zwei nebeneinander angeordneten Photodetektoren auf, die zum Detektieren von Detektionslicht ausgebildet sind, das beim Prüfen des Wertdokuments, aufgrund der Beleuchtung mit der Lichtquelle, in einem Detektionsbereich der Messebene von dem Wertdokument ausgeht und sich entlang des Detektionsstrahlengangs zu den Photodetektoren ausbreitet. Das Detektionslicht des Wertdokuments ist durch die Photodetektoren in mindestens zwei verschiedenen Spektralbereichen detektierbar. Das bedeutet, mindestens einer der Photodetektoren der Detektionseinrichtung detektiert einen anderen spektralen Anteil des von dem beleuchteten Bereich ausgehenden Detektionslichts als die anderen Photodetektoren der Detektionseinrichtung. Beispielsweise ist jeder der Photodetektoren zum Detektieren eines anderen spektralen Anteils des Detektionslichts ausgebildet als die übrigen Photodetektoren der Detektionseinrichtung.

Der Sensor weist ferner eine den Photodetektoren gemeinsame Sammeloptik auf, durch die das im Detektionsbereich von dem Wertdokument ausgesendete Detektionslicht gesammelt und zu einem Lichtbündel kollimiert werden kann. Die Sammeloptik ist derart angeordnet, dass sie das senkrecht zur Wertdokumentebene ausgesendete Detektionslicht des Wertdokuments sammelt und das in einem Winkelbereich um die Senkrechte herum ausgesendet Detektionslicht. Die Sammeloptik wird z.B. durch eines oder mehrere refraktive optische Elemente und/oder diffraktive optische Elemente gebildet. Vorzugsweise wird die Sammeloptik durch eine oder mehrere Sammellinsen gebildet. Entlang der optischen Achse des Detektionsstrahlengangs betrachtet sind die Photodetektoren hinter der Sammeloptik angeordnet. Zusätzlich zur Sammeloptik ist jedem der Photodetektoren eine Detektorlinse zugeordnet, die entlang der optischen Achse des Detektionsstrahlengangs betrachtet, hinter der Sammeloptik und vor dem jeweiligen Photodetektor angeordnet ist. Als optische Achse des Detektionsstrahlengangs wird die optische Achse der Sammeloptik bezeichnet, wobei die mit "entlang der optischen Achse des Detektionsstrahlengangs" bezeichnete Richtung sich auf die Ausbreitungsrichtung des Detektionslichts von dem Detektionsbereich zur Sammeloptik bezieht.

Die Detektorlinsen sind derart nebeneinander angeordnet, dass jede Detektorlinse ein Teillichtbündel des durch die Sammeloptik kollimierten Lichtbündels aufnimmt und auf den jeweiligen Photodetektor richtet, so dass der Detektionsbereich, dessen Detektionslicht durch die Photodetektoren zum selben Zeitpunkt detektierbar ist, für die verschiedenen Photodetektoren im Wesentlichen übereinstimmt. Unter im Wesentlichen übereinstimmenden Detektionsbereichen wird ein flächenmäßiger Überlapp der Detektionsbereiche der Photodetektoren von mindestens 50% verstanden, vorzugsweise von mindestens 80%.

Im Gegensatz zum oben genannten Stand der Technik werden durch die Photodetektoren also nicht voneinander getrennte, nebeneinander auf dem Wertdokument liegende Detektionsbereiche detektiert. Sondern, durch die erfindungsgemäße Anordnung der Sammeloptik, der Detektorlinsen und der Photodetektoren wird erreicht, dass das Detektionslicht, das die Photodetektoren detektierten, aus einem im Wesentlichen übereinstimmenden Detektionsbereich des in der Messebene vorhandenen Wertdokuments stammt. Auf diese Weise wird ein Sensor realisiert, der zum selben Zeitpunkt verschiedene spektrale Anteile des von diesem Detektionsbereich ausgehenden Detektionslichts detektieren kann und der dennoch einen kompakten optischen Aufbau hat.

Durch die erfindungsgemäße Anordnung wird erreicht, dass die durch die Photodetektoren detektierten verschiedenen spektrale Anteile des Detektionslichts aus im Wesentlichen demselben Detektionsbereich stammen. Dadurch, dass die Lage und Ausdehnung des Detektionsbereichs der einzelnen Photodetektoren im Wesentlichen übereinstimmen, wird eine genauere Überprüfung der lokalen Wertdokumenteigenschaften, z.B. von Echtheitsmerkmalen, möglich. Denn, wenn die in verschiedenen Spektralbereichen detektierten Intensitäten, z.B. für einen Echtheitsnachweis, miteinander in Bezug gesetzt werden, erfolgt dies mit größerer örtlicher Übereinstimmung als bisher. Außerdem wird eine zeitlich synchrone Detektion mehrerer spektraler Anteile des Detektionslichts am selben Detektionsort ermöglicht. Eine nachträgliche Korrektur des seitlichen Versatzes ist nicht nötig.

Die Detektorlinsen sind derart nebeneinander im Detektionsstrahlengang angeordnet, dass das durch die Sammeloptik kollimierte Lichtbündel durch die Detektorlinsen in mindestens zwei Teillichtbündel lateral aufgeteilt wird. Und sie sind derart angeordnet, dass die Teillichtbündel durch die jeweilige Detektorlinse auf den jeweiligen Photodetektor gerichtet werden. Die Teillichtbündel sind Teilbündel des kollimierten Lichtbündels, die durch geometrische Aufteilung aus dem kollimierten Lichtbündel gebildet werden. Das heißt, die Teillichtbündel gehen ohne Strahlumlenkung und ohne Richtungsänderung aus dem kollimierten Lichtbündel hervor, also ohne dazwischen liegende Strahlteiler, Dispersionselemente etc.. Die geometrische Aufteilung des Lichtbündels in die Teilbündel kann durch Abschirmblenden unterstützt werden, die zwischen den Detektorlinsen (entlang der optischen Achse des Detektionsstrahlengangs betrachtet vor und/oder nach den Detektorlinsen) angeordnet sind.

Um eine laterale Aufteilung des Detektionslichts auf die Detektorlinsen zu erreichen, sind die optischen Achsen der Detektorlinsen jeweils außerhalb der optischen Achse des Detektionsstrahlengangs angeordnet. Bevorzugt weisen die optischen Achsen der Detektorlinsen von der optischen Achse des Detektionsstrahlengangs für mindestens zwei oder für alle Detektorlinsen denselben lateralen Abstand auf. Insbesondere ist die Anordnung der Photodetektoren und der zugehörigen Detektorlinsen derart, dass der Mittelpunkt der beiden Anordnungen, insbesondere deren Symmetrieachse oder deren Symmetriezentrum, im Wesentlichen auf der optischen Achse des Detektionsstrahlengangs liegt.

Bevorzugt sind die Sammeloptik, die Detektorlinsen und die Photodetektoren derart zueinander und derart in Bezug zur Messebene angeordnet, dass die Detektionsbereiche, deren Detektionslicht die Photodetektoren zum selben Zeitpunkt detektieren, für die verschiedenen Photodetektoren deckungsgleich sind. Um einen deckungsgleichen Detektionsbereich zu erreichen, sind die optischen Achsen der Detektorlinsen bevorzugt parallel zur optischen Achse des Detektionsstrahlengangs orientiert und lateral zu dieser versetzt. Außerdem sind die Photodetektoren bevorzugt auf der optischen Achse der jeweiligen Detektorlinse angeordnet. Der laterale Abstand der Photodetektoren zur optischen Achse des Detektionsstrahlengangs ist z.B. für mindestens zwei oder für alle Photodetektoren gleich groß.

Insbesondere kann die Anordnung der Detektorlinsen so gewählt sein, dass das durch die Sammeloptik kollimierte Lichtbündel durch die Detektorlinsen gleichmäßig in mindestens zwei Teillichtbündel lateral aufgeteilt wird, d.h. die Teillichtbündel enthalten gleich große Intensitätsanteile des Detektionslichts. Die gleichmäßige Aufteilung des kollimierten Lichtbündels in die Teillichtbündel schließt auch den Fall ein, dass ein Intensitätsanteil des kollimierten Lichtbündels für einen zusätzlichen Photodetektor verwendet wird oder Intensitätsanteile bei der Aufteilung verloren gehen. Abgesehen von einer unterschiedlichen spektralen Filterung des Detektionslichts, erlaubt die gleichmäßige Aufteilung des kollimierten Lichtbündels in die Teillichtbündel, dass das Detektionslicht jedes Punkts des Detektionsbereichs gleichmäßig auf die Photodetektoren aufgeteilt wird, d.h. dass die Photodetektoren der Detektionseinrichtung gleich große Intensitätsanteile des Detektionslichts erhalten. Damit wird erreicht, dass der spektral getrennten Detektion jeweils derselbe Anteil des Detektionslichts zugrunde gelegt wird. Die detektierten Intensitäten sind damit noch besser miteinander vergleichbar und können einfach miteinander in Bezug gesetzt werden.

Die Detektorlinsen sind entlang der optischen Achse des Detektionsstrahlengangs vorzugsweise unmittelbar hinter der Sammeloptik angeordnet. Bevorzugt sind die Detektorlinsen koplanar in einer Ebene angeordnet, die parallel zur Messebene des Wertdokuments liegt. Insbesondere sind die Detektorlinsen nebeneinander auf einem gemeinsamen Träger befestigt. Zum Beispiel sind alle Detektorlinsen gleich ausgebildet, insbesondere mit gleicher Form und/oder gleicher Brennweite. Alternativ können auch einige Detektorlinsen eine andere Form und/oder Brennweite aufweisen. Die Detektorlinsen sind vorzugsweise voneinander getrennt ausgebildete Einzellinsen. Bevorzugt sind die Detektorlinsen einzeln in einer gemeinsamen lichtundurchlässigen Halterung aufgenommen, damit an dieser Stelle - auch bei einer z.B. durch Lichtstreuung auftretenden Richtungsablenkung von Detektionslicht - kein Detektionslicht auf einen anderen der Photodetektoren treffen kann als vorgesehen, d.h. damit kein Übersprechen in einen anderen der detektierten Spektralbereiche stattfinden kann.

Die Detektorlinsen und die Photodetektoren sind derart zueinander angeordnet, dass jedem der Photodetektoren eine Detektorlinse zugeordnet ist. Auch die Photodetektoren der Detektionseinrichtung sind bevorzugt koplanar in einer Ebene angeordnet, die parallel zur Messebene des Wertdokuments liegt. Bevorzugt sind die Photodetektoren auf einer den Photodetektoren gemeinsamen Aufnahme nebeneinander angeordnet. Die Aufnahme weist z.B. eine Vielzahl von Positionen auf, die jeweils zur Aufnahme eines Photodetektor-Bauteils oder eines chipförmigen Photodetektors ausgebildet sind. Um eine eineindeutige Zuordnung zwischen den Detektorlinsen und den Photodetektoren zu erhalten, sind die Photodetektoren auf der Aufnahme so angeordnet, dass ihre Anordnung der Anordnung der Detektorlinsen entspricht. Bevorzugt sind die Photodetektoren und die jeweilige Detektorlinse des Photodetektors so zueinander angeordnet, dass jeder Photodetektor etwa im Brennpunkt der ihm zugeordneten Detektorlinse angeordnet ist.

Die Sammeloptik ist derart angeordnet, dass das von jedem Detektionsort des Detektionsbereichs ausgesendete Detektionslicht des Wertdokuments durch die Sammeloptik zu einem Lichtbündel kollimiert wird, das aus zueinander parallelen Lichtstrahlen besteht. Das von dem genau am Schnittpunkt der optischen Achse mit der Messebene liegenden Detektionsort ausgehende Detektionslicht, wird durch die Sammeloptik zu einem (aus zueinander parallelen Lichtstrahlen bestehenden) Parallelbündel kollimiert, das genau parallel zur optischen Achse des Detektionsstrahlengangs verläuft. Das Lichtbündel besteht für jeden einzelnen Detektionsort innerhalb des Detektionsbereichs aus einem Parallelbündel, wobei verschiedene Detektionsorte des Detektionsbereichs leicht zueinander geneigte Parallelbündel haben. Das Kollimieren des Detektionslichts in das Parallelbündel kann dadurch erreicht werden, dass die Messebene bzw. der Detektionsbereich in der Brennebene der gemeinsamen Sammellinse liegt. Dadurch dass die Sammeloptik das Detektionslicht zu einem parallel zur optischen Achse verlaufenden Parallelbündel umwandelt, wird erreicht, dass bei der Aufteilung des Lichtbündels in die Teillichtbündel, die spektralen Anteile des Detektionslicht sehr gut voneinander getrennt werden können. Im Vergleich dazu ist es nachteilig, wenn die Sammeloptik kein Parallelbündel, sondern ein divergentes oder konvergentes Lichtbündel erzeugt, da in diesen Fällen, aufgrund der schräg verlaufenden Lichtstrahlen die Gefahr eines Übersprechens auf einen falschen Photodetektor und damit in einen anderen der detektierten Spektralbereiche besteht.

Die Sammeloptik und die Detektorlinsen sind derart in Bezug zur Messebene und derart zueinander angeordnet, dass die Teillichtbündel, die vom selben Detektionsort des Detektionsbereichs ausgehen, im Abschnitt zwischen der Sammeloptik und der Detektorlinse jeweils in sich parallel sind und zueinander parallel verlaufen. Dadurch wird ein Übersprechen in einen anderen der detektierten Spektralbereiche weiter vermieden.

Die Sammeloptik und die Detektorlinsen sind entlang der optischen Achse des Detektionsstrahlengangs bevorzugt derart wenig voneinander beabstandet angeordnet, dass bei der Abbildung des Detektionsbereichs auf die Photodetektoren Vignettierungsfehler vermieden werden. Dadurch wird erreicht, dass zum Rand des Detektionsbereichs keine Abschattung des Detektionslichts erfolgt und alle Punkte des Detektionsbereichs gleich gewichtet auf den Photodetektor abgebildet werden. Insbesondere ist zu diesem Zweck der Abstand zwischen der Sammeloptik und den Detektorlinsen kleiner als der Aperturdurchmesser der Sammeloptik.

Bevorzugt sind die Sammeloptik, die Detektorlinsen und die Photodetektoren in Bezug auf die Messebene derart angeordnet, dass der Detektionsbereich auf die Photodetektoren scharf abgebildet wird. Insbesondere sind die Photodetektoren der Detektionseinrichtung derart im Brennpunkt der dem jeweiligen Photodetektor zugeordneten Detektorlinse angeordnet, dass eine scharfe Abbildung des Detektionsbereichs auf die Photodetektoren erfolgt. Dadurch dass eine scharfe Abbildung des Detektionsbereichs auf die Photodetektoren erfolgt, ist der Detektionsbereich des Wertdokuments klar definiert und räumlich begrenzt. Dies stellt einen Vorteil gegenüber einer unscharfen Detektion des Wertdokuments dar und gegenüber einer einfachen Lichtleiteroptik, durch die das Licht des Wertdokuments nicht abgebildet wird, sondern ohne definierten Strahlengang vom Lichtleiter auf den Photodetektor gebracht wird. Da bei einer unscharfen Abbildung des Detektionsbereichs auf die Photodetektoren der Rand des Detektionsbereichs nicht scharf begrenzt ist, sondern lateral ausgedehnt, werden die Photodetektoren mit Detektionslicht überstrahlt. Der Vorteil der scharfen Abbildung liegt darin, dass nacheinander detektierte Wertdokumentbereiche eines am Sensor vorbeitransportierten Wertdokuments, auch wenn diese direkt aneinander grenzen, ohne gegenseitige Überlappung, d.h. voneinander getrennt detektiert werden können. Dies ermöglicht eine genauere Bestimmung der lokalen Eigenschaften des Wertdokuments. Um einen kompakten Aufbau des Sensors zu erreichen, wird der Detektionsbereich durch die Sammeloptik und die jeweilige Detektorlinse insbesondere verkleinert auf den jeweiligen Photodetektor abgebildet.

Sofern die Teillichtbündel als Parallelbündel ausgebildet sind, kann die scharfe Abbildung des Detektionsbereichs auf jeden der Photodetektoren dadurch erreicht werden, dass die Photodetektoren der Detektionseinrichtung im Brennpunkt der dem jeweiligen Photodetektor zugeordneten Detektorlinse angeordnet sind. Im Fall leicht divergenter oder konvergenter Lichtbündel erfolgt die scharfe Abbildung außerhalb des Brennpunkts des jeweiligen Photodetektors.

Im Fall eines Sensors, der zur Prüfung eines Wertdokuments ausgebildet ist, das zu dessen Prüfung entlang einer Transportrichtung an dem Sensor vorbeitransportiert wird, ist es bevorzugt, dass mindestens zwei der Photodetektoren der Detektionseinrichtung senkrecht zur Transportrichtung des Wertdokuments zueinander versetzt angeordnet sind und, entlang der Transportrichtung betrachtet, an derselben Position angeordnet sind. Dies erlaubt eine genauere Wertdokumentprüfung, wenn zur Prüfung eines Wertdokumentes, die von derart angeordneten Photodetektoren detektierten Intensitäten miteinander in Bezug gesetzt werden. Denn Messabweichungen, die aufgrund von Flatterbewegungen des transportierten Wertdokuments auftreten können, wirken sich auf die detektierten Intensitäten derart angeordneter Photodetektoren näherungsweise gleichstark aus.

Der Sensor kann eine oder mehrere Messspuren aufweisen, die jeweils eine der oben genannten Detektionseinrichtungen aufweisen und optional auch jeweils eine oder mehrere Lichtquellen. Die in den einzelnen Messspuren detektierten Spektralbereiche können gleich oder verschieden sein. Auch die Lichtquellen der einzelnen Messspuren können gleich oder verschieden sein. Es können aber auch eine oder mehrere gemeinsame Lichtquellen für mehrere Detektionseinrichtungen des Sensors verwendet werden.

Der Sensor kann eine oder mehrere gleiche oder verschiedene Lichtquellen aufweisen. Im Fall mehrerer Lichtquellen beleuchten diese bevorzugt denselben Beleuchtungsbereich in der Messebene. Die Lichtquellen sind, entlang der Transportrichtung des Wertdokument betrachtet, bevorzugt vor und/oder nach der Detektionseinrichtung angeordnet, wobei der Detektionsbereich insbesondere schräg zur optischen Achse des Detektionsstrahlengangs beleuchtet wird. Dadurch kann der Sensor quer zur Transportrichtung mit mehren Messspuren ausgestattet werden, die weniger voneinander beabstandet sind als dies bei einer senkrecht zur Transportrichtung versetzten Anordnung der Lichtquellen möglich ist. Der Sensor kann mehrere gleiche Lichtquellen aufweisen. Zum Beispiel können beidseitig der Detektionseinrichtung spiegelbildlich dieselben Lichtquellen angeordnet sein. Der Sensor kann aber mehrere Lichtquellen mit verschiedenen Emissionsspektren aufweisen, deren Intensitätsmaxima bei verschiedenen Wellenlängen liegen. Insbesondere kann der Sensor eine oder mehrere Lichtquellen aufweisen, deren Emissionsspektren im ultravioletten Spektralbereich liegen und/oder eine oder mehrere Lichtquellen, deren Emissionsspektren im visuell sichtbaren Spektralbereich liegen und/oder eine oder mehrere Lichtquellen, deren Emissionsspektren im infraroten Spektralbereich liegen. Als Lichtquellen werden bevorzugt lichtemittierende Dioden eingesetzt, beispielsweise Leuchtdioden (LED), insbesondere Halbleiter-Leuchtdioden oder organische Leuchtdioden (OLED), und/oder Laserdioden, insbesondere vertikal-cavity surface emitting laser (VCSEL).

Die Detektionseinrichtung ist zum Detektieren von Detektionslicht ausgebildet, das, beim Prüfen des Wertdokuments, von dem beleuchteten Bereich des Wertdokuments ausgeht. Das Detektionslicht des Wertdokuments kann Lumineszenzlicht des Wertdokuments sein, das der beleuchtete Bereich des Wertdokuments aufgrund der Anregung durch das Licht der Lichtquellen aussendet. Alternativ kann das Detektionslicht auch Remissionslicht oder Transmissionslicht des Wertdokuments sein. Gegebenenfalls ist die Detektionseinrichtung zusätzlich auch zur Detektion von Remissions- oder Transmissionslicht ausgebildet. Zur Detektion von Lumineszenzlicht detektieren die Photodetektoren, z.B. für einen oder mehrere Zeitpunkte nach Ende eines Lichtpulses der Beleuchtung, jeweils einen Messwert, um verschiedene spektrale Anteile das Detektionslichts zu erfassen.

Die Photodetektoren der Detektionseinrichtung können durch den Sensor derart angesteuert werden, dass die Photodetektoren das Detektionslicht des Detektionsbereichs zeitlich synchron zueinander detektieren. Dadurch wird eine gleichzeitige Detektion verschiedener Spektralkomponenten des Detektionslichts möglich. Zur Prüfung des Wertdokuments werden die Lichtquellen und die Detektoren zum Beispiel getaktet betrieben, wobei nach Ende eines Beleuchtungspulses der Lichtquelle, zu einem oder mehreren Zeitpunkten die Intensität des Lumineszenzlichts in mehreren Spektralbereichen zeitlich synchron zueinander detektiert wird. Im Fall der Lumineszenzprüfung ist die Taktung der Beleuchtung und Detektion vorzugweise so schnell, dass das Wertdokument entlang jeder der Messspuren quasi kontinuierlich geprüft wird.

Bevorzugt weist die Detektionseinrichtung einen zusätzlichen Photodetektor zur Detektion von Remissionslicht des Wertdokuments auf. Der zusätzliche Photodetektor kann, analog zu den oben genannten Photodetektoren, lateral versetzt zur optischen Achse des Detektionsstrahlengangs angeordnet sein. Der zusätzliche Photodetektor kann auch auf der optischen Achse des Detektionsstrahlengangs angeordnet sein, so dass durch ihn das entlang der optischen Achse des Detektionsstrahlengangs ausgesendete Detektionslicht des Wertdokuments detektierbar ist. Und entlang des Detektionsstrahlengangs ist dem zusätzlichen Photodetektor eine Linse vorgelagert, die zwischen den nebeneinander liegenden Detektorlinsen der Detektionseinrichtung angeordnet ist. Der zusätzliche Photodetektor kann, synchron zur Beleuchtung durch die Lichtquellen, jeweils einen Messwert aufnehmen, um das Remissionslicht oder das Transmissionslicht des beleuchteten Wertdokuments zu detektieren. Der zusätzliche Photodetektor kann als Monitordetektor zur Überprüfung der Lichtquellenintensität verwendet werden und/oder die Funktion einer Lichtschranke übernehmen. Vorzugsweise ist der zusätzliche Photodetektor auf im Wesentlichen denselben Detektionsbereich der Messebene gerichtet wie die oben genannten Photodetektoren der Detektionseinrichtung. Dadurch ist durch den zusätzlichen Photodetektor das Detektionslicht im Wesentlichen desselben Detektionsbereichs detektierbar wie durch die übrigen Photodetektoren der Detektionseinrichtung. Der Sensor kann daher selbstständig die Lage und den Eintreffzeitpunkt der Kanten und eines Druckbilds des Wertdokuments detektieren. Da der Sensor mit dem zusätzlichen Photodetektor auch das Remissionslicht des Detektionsbereichs detektieren kann, kann der Sensor die Lage des Detektionsbereichs auf dem Wertdokument, in dem Lumineszenzlicht detektiert wird, genau feststellen.

Damit kann eine genauere Zuordnung zwischen dem detektierten Lumineszenzsignal zu dem Ort auf dem Wertdokument erreicht werden als es durch einen getrennt von dem Sensor ausgebildeten zusätzlichen Remissionssensor möglich wäre. Damit ist eine genauere Prüfung des Wertdokuments möglich.

Bevorzugt weist die Detektionseinrichtung mindestens vier der oben genannten Photodetektoren auf, die derart nebeneinander angeordnet sind, dass sie ein zweidimensionales Photodetektorarray bilden. Der Mittelpunkt des Photodetektorarrays, insbesondere die Symmetrieachse oder das Symmetriezentrum, liegt im Wesentlich auf der optischen Achse des Detektionsstrahlengangs. Das Photodetektorarray kann durch eine orthogonale Anordnung der Photodetektoren gebildet sein, es kann aber auch durch eine nicht-orthogonale Anordnung gebildet sein. Zum Beispiel können zumindest einige der Photodetektoren konzentrisch um den Mittelpunkt des Photodetektorarrays verteilt angeordnet sein, bevorzugt mit gleichem Winkelabstand voneinander. Den mindestens vier Photodetektoren ist jeweils eine Detektorlinse zugeordnet, die entlang des Strahlengangs zwischen der Sammeloptik und dem jeweiligen Photodetektor angeordnet ist. Die Detektorlinsen sind derart nebeneinander angeordnet, dass das von der gemeinsamen Sammeloptik kollimierte Lichtbündel durch die Detektorlinsen in mindestens vier zueinander parallele Lichtbündel aufgeteilt wird, die durch die Detektorlinsen auf den jeweiligen Photodetektor gerichtet werden. Durch die mindestens vier Photodetektoren kann der übereinstimmende Detektionsbereich zum selben Zeitpunkt in vier oder mehr Spektralbereichen detektiert werden. Da damit vier oder mehr Lumineszenzintensitäten am übereinstimmenden Detektionsort unabhängig voneinander detektiert werden können, lassen sich diese sich mit hoher Genauigkeit miteinander in Bezug setzen.

Die von der Detektionseinrichtung aufgenommenen Messwerte werden anschließend durch eine Auswerteeinrichtung ausgewertet, die Bestandteil des Sensors sein kann oder auch durch eine externe Auswerteeinrichtung gebildet wird. Vorzugsweise erfolgt bereits durch den Sensor, insbesondere durch eine interne Auswerteeinrichtung des Sensors, zumindest eine Vorverarbeitung der Messwerte. Die weitere Auswertung kann ebenfalls durch die interne Auswerteeinrichtung oder alternativ durch eine zentrale Auswerteeinrichtung der Vorrichtung erfolgen, in die der Sensor eingebaut ist.

Vorzugsweise ist für den Sensor eine Steuerungseinrichtung vorgesehen, die dazu eingerichtet ist, die Lichtquellen und die Photodetektoren der Detektionseinrichtung taktweise ein- und wieder auszuschalten. Die Steuerungseinrichtung kann als Bestandteil des Sensors ausgebildet sein, sie kann aber auch als externe Steuerungseinrichtung, z.B. als Bestandteil einer Vorrichtung zur Wertdokumentbearbeitung ausgebildet sein, in die der Sensor eingebaut wird. Die Steuereinrichtung ist dazu eingerichtet, die Lichtquellen und die Detektionseinrichtung, insbesondere die Photodetektoren des Sensors anzusteuern. Beim Betreiben des Sensors schaltet die Steuerungseinrichtung die Photodetektoren zeitlich synchron zueinander ein und wieder aus. Vorzugsweise weist der Sensor außerdem ein Gehäuse auf, in dem die Lichtquellen und die Detektionseinrichtung angeordnet sind, optional auch die Steuereinrichtung und Auswerteeinrichtung.

Insbesondere sind die Lichtquellen zur Anregung von Lumineszenzlicht des Wertdokuments ausgebildet und die Photodetektoren der Detektionseinrichtung zum Detektieren von Lumineszenzlicht des Wertdokuments. Bevorzugt ist jeder der Photodetektoren zum Detektieren eines anderen spektralen Anteils des Lumineszenzlichts ausgebildet. Beispielsweise sind die Spektralbereiche der Photodetektoren so voneinander getrennt, dass sie sich nicht überlappen.

In einem Ausführungsbeispiel sind den Photodetektoren unterschiedliche spektrale Filter zugeordnet, die im individuellen Detektionsstrahlengang des jeweiligen Photodetektors, nach der Sammeloptik und vor dem jeweiligen Photodetektor angeordnet sind. Besonders geeignet sind dazu Interferenzfilter, durch die der jeweils detektierte Spektralbereich auf einen nahezu beliebigen Wellenlängenbereich gelegt werden kann. Im Fall von Interferenzfiltern werden diese bevorzugt jeweils im Strahlengang des parallelen Teillichtbündels angeordnet, zum Beispiel zwischen der Sammeloptik und der jeweiligen Detektorlinse. Der Durchlässigkeitsbereich der Interferenzfilter wird spektral so gewählt, dass das jeweilige Interferenzfilter für den durch den jeweiligen Photodetektor zu detektierenden spektralen Anteil des Detektionslichts durchlässig ist. Als Interferenzfilter werden beispielsweise Bandpassfilter verwendet. Die Interferenzfilter der Photodetektoren werden spektral so gewählt, dass sie nur denjenigen spektralen Anteil des Detektionslichts durchlassen, den der jeweilige Photodetektor detektieren soll, aber die übrigen spektralen Anteile des Detektionslichts, die ggf. durch einen der anderen Photodetektoren detektiert werden sollen, abblockt. Um die spektralen Anteile getrennt voneinander zu detektieren, werden die Interferenzfilter mindestens zweier Photodetektoren z.B. so gewählt, dass sie eine zueinander gegenläufige spektrale Durchlässigkeit haben. Die spektrale Kante der Interferenzfilter, die den Übergang von der Durchlässigkeit zu Nichtdurchlässigkeit des Interferenzfilters markiert, wird dann dementsprechend zwischen die verschiedenen spektralen Anteile des Detektionslichts gelegt.

Um verschiedene spektrale Anteile, die spektral relativ nah zueinander benachbart sind, gut voneinander trennen zu können, werden Interferenzfilter mit großer (spektraler) Kantensteilheit bevorzugt. Die Kantensteilheit der Interferenzfilter kann unabhängig von der Wellenlänge angegeben werden durch die relative Kantensteilheit K=(λ₉₀-λ₀₁)/λ₅₀, wobei mit λ₉₀ bzw. mit λ₅₀ bzw. mit λ₀₁ diejenige Wellenlänge angegeben ist, bei das jeweilige Interferenzfilter 90% bzw. 50% bzw. 1% seines Transmissionsgrads erreicht. Die relative Kantensteilheit K der verwendeten Interferenzfilter liegt vorzugsweise bei höchstens 2%. Bevorzugt ist die relative Kantensteilheit K der verwendeten Filter geringer als der relative spektrale Abstand ΔX/λ der spektralen Anteile, die im Detektionslicht des Wertdokuments durch die Photodetektoren zu detektieren sind und voneinander unterschieden werden sollen, z.B. geringer als der relative spektrale Abstand ΔX/λ zweier getrennt voneinander zu detektierender Spektrallinien. Dabei ist mit Δλ der spektrale Abstand der zu unterscheidenden spektralen Anteile bzw. Spektrallinien und mit λ die spektrale Mitte der beiden spektralen Anteile, z.B. die spektrale Mitte der beiden Spektrallinien angegeben. Der relative spektrale Abstand ΔX/λ beträgt insbesondere mindestens 4%.

Werden bei zwei oder mehreren der Photodetektoren spektrale Filter mit gegenläufiger spektraler Durchlässigkeit und einer derart großen Kantensteilheit K<Δλ/λ eingesetzt, so ergibt sich aus dem Verhältnis der von den Photodetektoren detektierten Intensitäten unmittelbar das Verhältnis der spektralen Anteile, insbesondere der Spektrallinien. Bei Filtern mit einer Kantensteilheit K, die dem relativen spektralen Abstand ΔX/λ entspricht oder größer ist, ist dies nicht möglich, da die detektierten Intensitäten fehlerbehaftet sind. Dies resultiert daraus, dass die spektralen Anteile - trotz deren spektralen Abstands - nicht nur von einem, sondern zu einem gewissen Anteil auch von einem anderen Photodetektor detektiert werden würde. Bevorzugt ist die relative Kantensteilheit K der spektralen Filter daher um mindestens einen Faktor 2 geringer als der relative spektrale Abstand ΔX/λ der voneinander zu unterscheidenden spektralen Anteile, insbesondere als der relative spektrale Abstand Δλ/λ der voneinander zu unterscheidenden Spektrallinien.

Die Erfindung betrifft außerdem eine Vorrichtung zur Prüfung von Wertdokumenten, die einen oder mehrere der erfindungsgemäßen Sensoren enthält. Die Vorrichtung ist beispielsweise eine Vorrichtung zur Bearbeitung von Wertdokumenten, insbesondere eine Sortiervorrichtung für Wertdokumente. Die Vorrichtung kann ein Transportsystem aufweisen, das dazu ausgebildet ist, Wertdokumente an dem Sensor vorbei zu transportieren, um nacheinander mehrere Detektionsbereiche des Wertdokuments zu detektieren. In der Variante, bei der das Wertdokument zu seiner Prüfung mit einer Transportgeschwindigkeit an dem Sensor vorbeitransportiert wird, wird der zeitliche Abstand zwischen Beleuchtungspuls und den Detektionszeitpunkten vorzugsweise so auf die Transportgeschwindigkeit des Wertdokuments abgestimmt, dass, trotz der Bewegung des Wertdokuments nahezu ausschließlich das Detektionslicht aus dem zuvor beleuchteten Bereich des vorbei transportierten Wertdokuments detektiert wird.

Nachfolgend wird die Erfindung beispielhaft anhand der folgenden Figuren erläutert. Es zeigen:
- Fig. 1a: eine Detektionseinrichtung des Sensors gemäß einem ersten Ausführungsbeispiel in einer Frontalansicht,
- Fig. 1b: einen Schnitt A-A durch die Detektionseinrichtung aus Figur 1a an der Stelle zweier Photodetektoren und einen Schnitt B-B durch die Detektionseinrichtung aus Figur 1a an der Stelle des zusätzlichen Photodetektors,
- Fig. 1c: einen senkrecht zu Schnitt A-A verlaufenden Schnitt C-C durch die Detektionseinrichtung aus Figur 1a an der Stelle zweier Photodetektoren,
- Fig. 1d: die Detektionseinrichtung und eine Beleuchtungseinrichtung des Sensors in Frontalansicht,
- Fig. 1e: einen Schnitt D-D durch die Detektionseinrichtung aus Figur 1d an der Stelle des zusätzlichen Photodetektors,
- Fig. 2: einen Sensor gemäß einem zweiten Ausführungsbeispiel mit einer Detektionseinrichtung aus zwei Photodetektoren und einer Beleuchtungseinrichtung des Sensors in Frontalansicht,
- Fig. 3: einen Sensor gemäß einem dritten Ausführungsbeispiel mit einer Detektionseinrichtung aus drei Photodetektoren und zwei Beleuchtungseinrichtungen des Sensors in Frontalansicht,
- Fig. 4: eine Frontalansicht eines Sensors mit neun Messspuren mit je einer Detektionseinrichtung und zwei Beleuchtungseinrichtungen pro Messspur, und ein zu prüfendes Wertdokument.

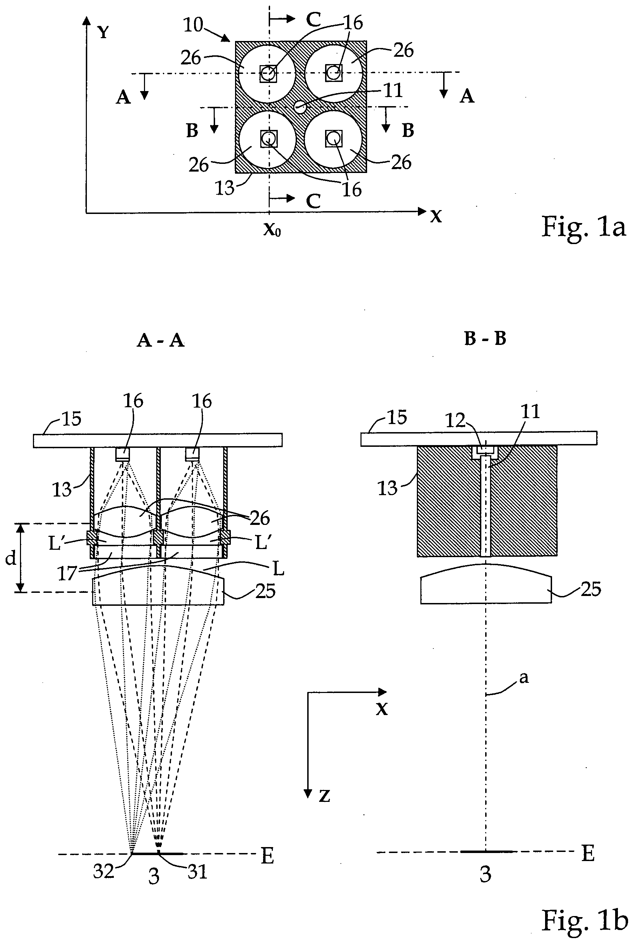

Im ersten Ausführungsbeispiel ist der Sensor zur Prüfung des Wertdokuments in einer oder mehreren Messspuren auf dem Wertdokument ausgebildet, für die jeweils eine Detektionseinrichtung 10 vorgesehen ist. Die Detektionseinrichtung 10 weist vier als Photodetektorarray angeordnete Photodetektoren 16 auf, vgl. Figur 1a. Vor jedem Photodetektor 16 ist, entlang des Detektionsstrahlengangs betrachtet, jeweils eine Detektorlinse 26 angeordnet. Wie die vier Photodetektoren 16 sind auch die vier Detektorlinsen 26 nebeneinander in einer Ebene angeordnet. Um ein Übersprechen in einen anderen der detektierten Spektralbereiche durch Streulicht auszuschließen, sind die Detektorlinsen getrennt voneinander in einer Halterung 13 aufgenommen, die aus einem lichtundurchlässigen Material besteht. In der Mitte der Detektionseinrichtung 10 befindet sich optional eine GRIN- (Gradientenindex-) Linse 11, um einen Teil des Detektionslichts auf einen zusätzlichen Photodetektor 12 zu richten, vgl. Figur 1b.

In Figur 1b sind die beiden in Figur 1a markierten Schnitte A-A und B-B durch die Detektionseinrichtung 10 gezeigt. In den beiden Schnitten erkennt man jeweils unten die Messebene E, in der ein zu prüfendes Wertdokument 1 angeordnet wird, und den in der Messebene E liegenden Detektionsbereich 3, dessen Detektionslicht die Detektionseinrichtung 10 detektiert. Das Detektionslicht des Detektionsbereichs 3 wird durch eine den Photodetektoren 16 gemeinsame Sammellinse 25 zu einem Lichtbündel L kollimiert. Im oberen Teil der Schnitte ist jeweils ein Träger 15 dargestellt, auf dem der zusätzliche Photodetektor 12, die vier Photodetektoren 16 und die Halterung 13 befestigt sind. Im linken Schnitt A-A sind ferner zwei der in der Halterung 13 aufgenommene Photodetektoren 16 und die diesen zugeordneten Detektorlinsen 26 gezeigt. Entlang des Detektionsstrahlengangs betrachtet ist vor jeder Detektorlinse 26 jeweils ein spektrales Filter 17 angeordnet. Die Filter 17 sind für verschiedene Spektralbereiche durchlässig, so dass mit den beiden Photodetektoren 16 zwei verschiedene Spektralkomponenten des Detektionslichts detektiert werden können. Die Photodetektoren 16 können z.B. Halbleiter-Photodetektoren auf der Basis von Si, Ge oder InGaAs sein oder PbS-Photodetektoren. Innerhalb einer Detektionseinrichtung 10 können als Photodetektoren 16 gleiche oder verschiedenenartige dieser Detektortypen verwendet werden.

Das Lichtbündel L wird durch die Anordnung der vier Detektorlinsen 26 in vier Teillichtbündel L' aufgeteilt. Das Detektionslicht, das von dem zentralen Punkt 31 des Detektionsbereichs 3 ausgeht, wird durch die Sammellinse 25 in ein Parallelbündel L' umgewandelt, welches parallel zur z-Achse verläuft. Das von dem Randpunkt 32 des Detektionsbereichs 3 ausgehende Detektionslicht wird durch die Sammellinse 25 in ein weiteres Parallelbündel L' umgewandelt, welches geringfügig zur z-Achse geneigt ist, das aber ebenfalls aus zueinander parallelen Lichtstrahlen besteht. Die geometrische Aufteilung des Lichtbündels L in die Teillichtbündel L' ist so, dass, abgesehen von der spektralen Filterung durch die Filter 17, gleich große Anteile des Detektionslichts von jedem der beiden Punkte 31 und 32 auf jede der vier Detektionslinsen 26 trifft. Die Zwischenwände der Halterung 13 dienen als Abschirmblenden zwischen den Teillichtbündeln L'. Der Abstand d zwischen der Sammellinse 25 und den Detektorlinsen 26 ist kleiner als der Aperturdurchmesser der Sammellinse 25. Durch jeden der vier Photodetektoren 16 kann auf diese Weise gleichzeitig das Detektionslicht desselben Detektionsbereichs 3 detektiert werden. Bei den in Figur 1b eingezeichneten Lichtstrahlen handelt es sich jeweils um eine Projektion des tatsächlichen Lichtstrahls auf die x-z-Ebene.

Im rechten Schnitt B-B ist der optionale zusätzliche Photodetektor 12 gezeigt, der auf der optischen Achse a des Detektionsstrahlengangs angeordnet ist. Durch die GRIN-Linse 11 kann ein Anteil des Detektionslichts des Detektionsbereichs 3 auf den zusätzlichen Photodetektor 12 abgebildet werden. Beispielsweise detektiert der zusätzliche Photodetektor 12 das Remissionslicht des zu prüfenden Wertdokuments, das während der Beleuchtung von dem Detektionsbereich 3 ausgeht. Entlang des Detektionsstrahlengangs des zusätzlichen Photodetektors 12 kann optional ein spektrales Filter angeordnet sein, um nur einen spektralen Anteil des Remissionslichts zu detektieren.

Beispielsweise sind die spektralen Filter 17 so gewählt, dass durch die Photodetektoren 16 nur Lumineszenzlicht des zu prüfenden Wertdokuments 1 detektiert wird. Um nur das Lumineszenzlicht zu detektieren, kann im Detektionsstrahlengang zusätzlich ein spektrales Kantenfilter enthalten sein, das allen vier Photodetektoren gemeinsam ist (nicht gezeigt). Die vier spektralen Filter 17 sind vorzugsweise Interferenzfilter, welche jeweils für eine andere Spektralkomponente des Lumineszenzlichts durchlässig sind. Die Detektionseinrichtung 10 kann auf diese Weise gleichzeitig die Intensitäten vier verschiedener Spektralkomponenten des Detektionslichts desselben Detektionsbereichs 3 auf dem Wertdokument detektieren. Die vier Filter sind in diesem Ausführungsbeispiel zwischen der gemeinsamen Sammellinse 25 und der jeweiligen Detektorlinse 26 angeordnet. Alternativ können die spektralen Filter 17 zwischen der jeweiligen Detektorlinse 26 und dem jeweiligen 16 Photodetektor angeordnet sein. Oder die verschiedenen spektralen Filter können durch die Detektorlinse 26 selbst gebildet werden. Zusätzlich oder alternativ zu den Filtern 17 können die Photodetektoren 16 verschiedene spektrale Empfindlichkeit aufweisen.

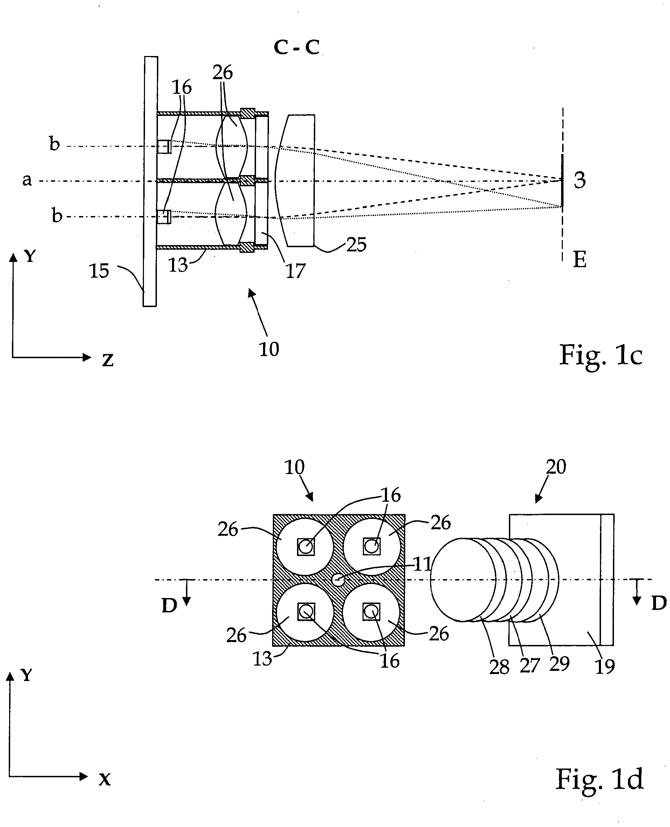

Figur 1c zeigt den in Figur 1a markierten Schnitt C-C durch die Detektionseinrichtung 10, der senkrecht zum Schnitt A-A durch einen der Photodetektoren 16 verläuft. Die beiden Photodetektoren 16, durch die der Schnitt C-C verläuft, sind senkrecht zur Transportrichtung x des Wertdokuments zueinander versetzt angeordnet und, entlang der Transportrichtung x betrachtet, an derselben Position xo angeordnet, vgl. Figur 1a. Zur Vereinfachung der Darstellung ist in Figur 1c für zwei Punkte des Detektionsbereichs 3 jeweils nur derjenige Lichtstrahl des Detektionslichts gezeigt, der den mittleren Lichtstrahl des Teillichtbündels L' bildet. Analog zu Figur 1b handelt es sich bei den eingezeichneten Lichtstrahlen jeweils um eine Projektion des tatsächlichen Lichtstrahls auf die y-z-Ebene. Die optischen Achsen b der Detektorlinsen 26 sind parallel zur optischen Achse a des Detektionsstrahlengangs orientiert und die Photodetektoren 16 liegen auf der optischen Achse b der jeweiligen Detektorlinse 26.

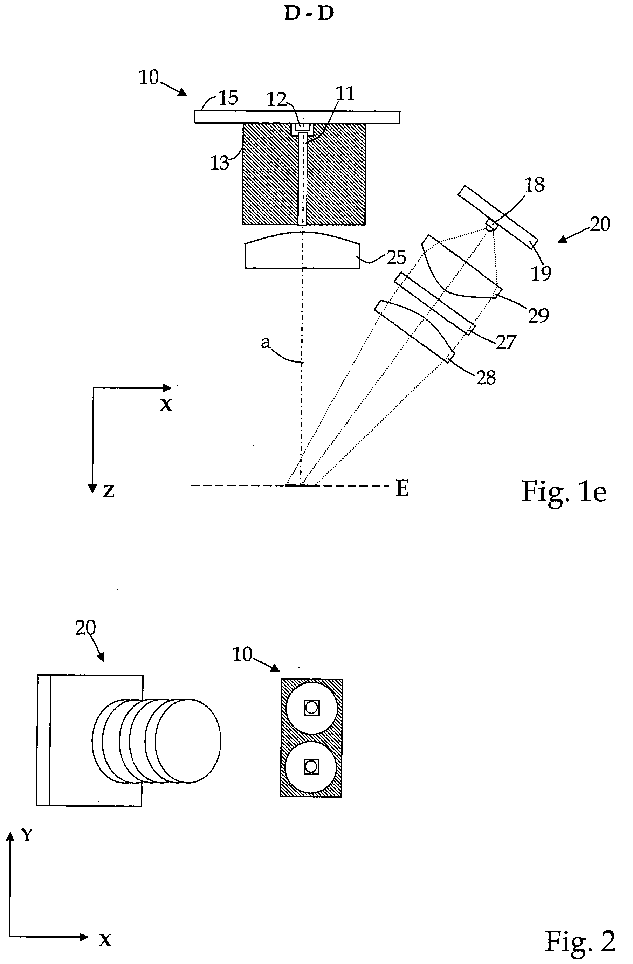

In Figur 1d ist eine Frontalansicht des Sensors parallel zur z-Achse, aus der Sicht des Detektionsbereichs 3 gezeigt, wobei die Sammellinse 25 zur Vereinfachung der Darstellung weggelassen ist. Neben der Detektionseinrichtung 10 ist eine Beleuchtungseinrichtung 20 angeordnet, welche zur Beleuchtung des Detektionsbereichs 3 verwendet wird. Die Beleuchtungseinrichtung beleuchtet z.B. einen Beleuchtungsbereich in der Messebene E, dessen Lage und Ausdehnung näherungsweise mit der des Detektionsbereichs 3 übereinstimmt. Die Beleuchtungseinrichtung 20 weist eine auf einem Träger 19 befestigte Lichtquelle 18 auf, vgl. Figur 1e (Lichtquelle 18 in Figur 1d nicht sichtbar), deren Emissionslicht mit Hilfe einer Beleuchtungsoptik auf das Wertdokument 1 gerichtet wird. Die Beleuchtungsoptik besteht z.B. aus zwei Linsen 28, 29 und einem dazwischen liegenden spektralen Filter 27, das nur den zur Beleuchtung des Wertdokuments gewünschten spektralen Anteil des Emissionslichts der Lichtquelle durchlässt. In Figur 1e ist der in Figur 1d markierte Schnitt D-D dargestellt, in dem die Lichtquelle 18 sichtbar ist und aus dem auch der Beleuchtungsstrahlengang hervorgeht.

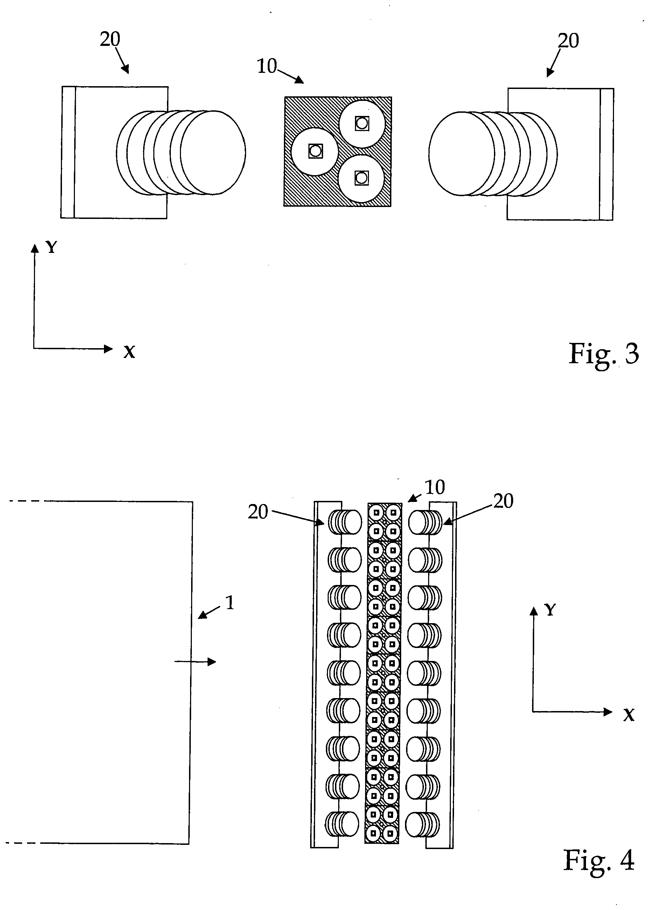

In den Figuren 2 und 3 sind zwei weitere Ausführungsbeispiele des Sensors in Frontalansicht parallel zur z-Achse gezeigt. Es ist jeweils nur eine Messspur dargestellt, der Sensor kann aber auch mehr als eine der dargestellten Messspuren aufweisen. Auch bei diesen Ausführungsbeispielen weisen die Photodetektoren 16 jeder Detektionseinrichtung 10 eine gemeinsame Sammellinse auf (nicht gezeigt). Die Detektionseinrichtungen 10 dieser Ausführungsbeispiele können optional einen zusätzlichen Photodetektor zur Detektion von Remissionslicht aufweisen. Die in Figur 2 dargestellte Messspur weist eine Beleuchtungseinrichtung 20 und eine Detektionseinrichtung 10 auf, die nur zwei Photodetektoren 16 mit jeweils vorgelagerter Linse 26 enthält. Die in Figur 3 dargestellte Messspur weist zwei Beleuchtungseinrichtungen 20 und eine Detektionseinrichtung 10 auf, die drei Photodetektoren 16 mit jeweils vorgelagerter Linse 26 enthält.

Figur 4 zeigt ein viertes Ausführungsbeispiel des Sensors in Frontalansicht parallel zur z-Achse aus der Sicht des Detektionsbereichs 3, wobei die Sammellinsen 25 zur Vereinfachung der Darstellung weggelassen sind. Der Sensor weist neun Messspuren auf, die jeweils aus einer Detektionseinrichtung 10 und zwei beidseitig neben der Detektionseinrichtung 10 angeordneten Beleuchtungseinrichtungen 20 bestehen. Die Photodetektoren 16, die spektralen Filter 17, 27 und die Lichtquellen 18 der einzelnen Messspuren können gleich oder verschiedenartig sein. Zur Prüfung eines Wertdokuments 1 wird das zu prüfende Wertdokument 1 entlang der Transportrichtung x an dem Sensor vorbeitransportiert. Während des Vorbeitransportierens wird zu mehreren Zeitpunkten das von dem jeweiligen Detektionsbereich 3 ausgehende Detektionslicht des Wertdokuments 1 detektiert, z.B. um das Wertdokument entlang der neun Messspuren abzutasten.

## Patentansprüche

1. Sensor zur Prüfung eines Wertdokuments (1), der dazu ausgebildet ist, dass zur Prüfung des Wertdokuments dieses in eine Messebene (E) des Sensors einbringbar ist und zu dessen Prüfung entlang einer Transportrichtung (x) an dem Sensor vorbeitransportiert wird, wobei der Sensor umfasst:
- Mindestens eine Lichtquelle (18), durch die ein in der Messebene (E) vorhandenes Wertdokument (1) in einem Bereich der Messebene beleuchtet werden kann,
- eine Detektionseinrichtung (10) mit mindestens zwei nebeneinander angeordneten Photodetektoren (16) zum Detektieren von Detektionslicht, das beim Prüfen des Wertdokuments (1), aufgrund der Beleuchtung mit der Lichtquelle (18), in einem Detektionsbereich (3) der Messebene (E) von dem Wertdokument ausgeht, wobei das Detektionslicht des Wertdokuments durch die Photodetektoren (16) in mindestens zwei verschiedenen Spektralbereichen detektierbar ist,
- eine den Photodetektoren (16) gemeinsame Sammeloptik (25), durch die das im Detektionsbereich (3) von dem Wertdokument ausgesendete Detektionslicht gesammelt und zu einem Lichtbündel (L) kollimiert werden kann, wobei die Photodetektoren (16), entlang der optischen Achse (a) des Detektionsstrahlengangs betrachtet, hinter der Sammeloptik (25) angeordnet sind,
**dadurch gekennzeichnet, dass**
- jedem der Photodetektoren (16) eine Detektorlinse (26) zugeordnet ist, die, entlang der optischen Achse (a) des Detektionsstrahlengangs betrachtet, hinter der Sammeloptik (25) und vor dem jeweiligen Photodetektor (16) angeordnet ist, und
- die Detektorlinsen derart nebeneinander angeordnet sind, dass jede Detektorlinse (26) ein Teillichtbündel (L') des durch die Sammeloptik (25) kollimierten Lichtbündels (L) aufnimmt und auf den jeweiligen Photodetektor (16) richtet, so dass der Detektionsbereich (3), dessen Detektionslicht durch die Photodetektoren (16) zum selben Zeitpunkt detektierbar ist, für die verschiedenen Photodetektoren im Wesentlichen übereinstimmt, wobei die optischen Achsen (b) der Detektorlinsen (26) jeweils derart außerhalb der optischen Achse (a) des Detektionsstrahlengangs angeordnet sind, dass das kollimierte Lichtbündel (L) durch die Detektorlinsen (26) in mindestens zwei Teillichtbündel (L') lateral aufgeteilt wird, wobei die optischen Achsen (b) der Detektorlinsen (26) von der optischen Achse (a) des Detektionsstrahlengangs bevorzugt denselben lateralen Abstand aufweisen, und
- mindestens zwei der Photodetektoren (16) der Detektionseinrichtung (10) senkrecht zur Transportrichtung des Wertdokuments zueinander versetzt, aber, entlang der Transportrichtung (x) betrachtet, an derselben Position (xo) angeordnet sind..

2. Sensor nach Anspruch 1, **dadurch gekennzeichnet, dass** die Sammeloptik (25) derart angeordnet ist, dass das von jedem Detektionsort (31, 32) des Detektionsbereichs (3) ausgesendete Detektionslicht des Wertdokuments durch die Sammeloptik (25) zu einem Lichtbündel (L) kollimiert wird, das aus zueinander parallelen Lichtstrahlen besteht.

3. Sensor nach einem der vorhergehenden Ansprüche, **dadurch gekennzeichnet, dass** die Sammeloptik (25) und die Detektorlinsen (26) derart in Bezug zur Messebene (E) und derart zueinander angeordnet sind, dass die Teillichtbündel (L'), die vom selben Detektionsort (31, 32) des Detektionsbereichs (3) ausgehen, im Abschnitt zwischen der Sammeloptik (25) und der Detektorlinse (26) jeweils in sich parallel sind und zueinander parallel verlaufen.

4. Sensor nach einem der vorhergehenden Ansprüche, **dadurch gekennzeichnet, dass** die Sammeloptik (25) und die Detektorlinsen (26) entlang der optischen Achse (a) des Detektionsstrahlengangs derart wenig voneinander beabstandet angeordnet sind, dass Vignettierungsfehler vermieden werden.

5. Sensor nach einem der vorhergehenden Ansprüche, **dadurch gekennzeichnet, dass** die Sammeloptik (25), die Detektorlinsen (26) und die Photodetektoren (16) in Bezug auf die Messebene (E) derart angeordnet sind, dass der Detektionsbereich (3) auf die Photodetektoren (16), bevorzugt auf jeden der Photodetektoren (16), scharf abgebildet wird.

6. Sensor nach einem der vorhergehenden Ansprüche, **dadurch gekennzeichnet, dass** die Photodetektoren (16) auf der optischen Achse (b) der dem jeweiligen Photodetektor zugeordneten Detektionslinse (26) angeordnet sind.

7. Sensor nach einem der vorhergehenden Ansprüche, **dadurch gekennzeichnet, dass** die Photodetektoren (16) durch den Sensor derart angesteuert werden, dass die Photodetektoren das Detektionslicht des Detektionsbereichs (3) zeitlich synchron zueinander detektieren.

8. Sensor nach einem der vorhergehenden Ansprüche, **dadurch gekennzeichnet, dass** die die Photodetektoren (16) zum Detektieren verschiedener spektraler Anteile von Lumineszenzlicht des Wertdokuments ausgebildet sind.

9. Sensor nach einem der vorhergehenden Ansprüche, **dadurch gekennzeichnet, dass** den Photodetektoren (16) unterschiedliche spektrale Filter (17) zugeordnet sind, die jeweils in einem individuellen Detektionsstrahlengang des Photodetektors (16) angeordnet sind.

10. Sensor nach einem der vorhergehenden Ansprüche, **dadurch gekennzeichnet, dass** die Detektionseinrichtung (10) einen zusätzlichen Photodetektor (12) zur Detektion von Remissionslicht des Wertdokuments (1) aufweist, der vorzugsweise auf im Wesentlichen denselben Detektionsbereich (3) gerichtet ist wie die oben genannten Photodetektoren (16) der Detektionseinrichtung (10).

11. Sensor nach einem der vorhergehenden Ansprüche, **dadurch gekennzeichnet, dass** die Detektorlinsen (26) voneinander getrennt ausgebildete Einzellinsen sind, die bevorzugt koplanar zueinander angeordnet sind.

12. Sensor nach einem der vorhergehenden Ansprüche, **dadurch gekennzeichnet, dass** die Detektionseinrichtung (10) mindestens vier der Photodetektoren (16) aufweist, die die derart nebeneinander angeordnet sind, dass sie ein zweidimensionales Photodetektorarray bilden, dessen Mittelpunkt auf der optischen Achse (a) des Detektionsstrahlengangs liegt.

13. Vorrichtung zur Prüfung von Wertdokumenten mit einem oder mehreren Sensoren gemäß einem der vorhergehenden Ansprüche.

## Claims

1. A sensor for checking a value document (1) which is configured such that for the check of the value document this is introducible into a measuring plane (E) of the sensor and for its check is transported along a transport direction (x) past the sensor, the sensor comprising:
- at least one light source (18) through which a value document (1) present in the measuring plane (E) can be illuminated in a region of the measuring plane,
- a detection device (10) having at least two photodetectors (16) arranged side by side for detecting detection light which, upon the check of the value document (1), emanates from the value document in a detection region (3) of the measuring plane (E) due to the illumination with the light source (18), wherein the detection light of the value document is detectable by the photodetectors (16) in at least two different spectral regions,
- a collecting optic (25) common to the photodetectors (16), through which the detection light emitted by the value document in the detection region (3) can be collected and collimated to a light beam (L), wherein the photodetectors (16) are arranged after the collecting optic (25), viewed along the optical axis (a) of the detection ray path,
**characterized in that**
- each of the photodetectors (16) has associated therewith a detector lens (26) which is arranged after the collecting optic (25) and before the respective photodetector (16), viewed along the optical axis (a) of the detection ray path, and
- the detector lenses are arranged side by side such that each detector lens (26) receives a partial light beam (L') of the light beam (L) collimated by the collecting optic (25) and directs it onto the respective photodetector (16), so that the detection region (3) whose detection light is detectable at the same point in time by the photodetectors (16) substantially coincides for the different photodetectors, wherein the optical axes (b) of the detector lenses (26) are respectively arranged outside the optical axis (a) of the detection ray path such that the collimated light beam (L) is divided laterally by the detector lenses (26) into at least two partial light beams (L'), wherein the optical axes (b) of the detector lenses (26) preferably have the same lateral distance from the optical axis (a) of the detection ray path, and
- at least two of the photodetectors (16) of the detection device (10) are arranged offset from each other perpendicularly to the transport direction of the value document, but at the same position (xo), viewed along the transport direction (x).

2. The sensor according to claim 1, **characterized in that** the collecting optic (25) is arranged such that the detection light of the value document emitted by each detection site (31, 32) of the detection region (3) is collimated by the collecting optic (25) to a light beam (L) consisting of mutually parallel light rays.

3. The sensor according to one of the preceding claims, **characterized in that** the collecting optic (25) and the detector lenses (26) are arranged in relation to the measuring plane (E) and to each other such that the partial light beams (L') emanating from the same detection site (31, 32) of the detection region (3) are respectively parallel in themselves and extend mutually parallel in the portion between the collecting optic (25) and the detector lens (26).

4. The sensor according to any of the preceding claims, **characterized in that** the collecting optic (25) and the detector lenses (26) are arranged along the optical axis (a) of the detection ray path at such a small space apart that vignetting errors are avoided.

5. The sensor according to any of the preceding claims, **characterized in that** the collecting optic (25), the detector lenses (26) and the photodetectors (16) are arranged with relation to the measuring plane (E) such that the detection region (3) is imaged sharply onto the photodetectors (16), preferably onto each of the photodetectors (16).

6. The sensor according to any of the preceding claims, **characterized in that** the photodetectors (16) are arranged on the optical axis (b) of the detection lens (26) associated with the respective photodetector.

7. The sensor according to any of the preceding claims, **characterized in that** the photodetectors (16) are controlled by the sensor such that the photodetectors detect the detection light of the detection region (3) in time synchronism with each other.

8. The sensor according to any of the preceding claims, **characterized in that** the photodetectors (16) are configured for detecting different spectral portions of luminescent light of the value document.

9. The sensor according to any of the preceding claims, **characterized in that** the photodetectors (16) have associated therewith different spectral filters (17) which are respectively arranged in an individual detection ray path of the photodetector (16).

10. The sensor according to any of the preceding claims, **characterized in that** the detection device (10) has an additional photodetector (12) for detecting remission light of the value document (1), which is preferably directed onto substantially the same detection region (3) as the above-mentioned photodetectors (16) of the detection device (10).

11. The sensor according to any of the preceding claims, **characterized in that** the detector lenses (26) are single lenses configured to be separate from each other which are preferably arranged coplanarly with each other.

12. The sensor according to any of the preceding claims, **characterized in that** the detection device (10) has at least four of the photodetectors (16) which are arranged side by side such that they form a two-dimensional photodetector array whose center lies on the optical axis (a) of the detection ray path.

13. An apparatus for checking value documents having one or several sensors according to any of the preceding claims.

## Revendications

1. Capteur destiné à l'examen d'un document de valeur (1), conçu pour que, pour l'examen du document de valeur, ce dernier puisse être introduit dans un plan de mesure (E) du capteur et soit, pour son examen, transporté le long d'une direction de transport (x) en passant par le capteur, cependant que le capteur comprend :
- au moins une source d'éclairage (18) par laquelle un document de valeur (1) présent dans le plan de mesure (E) peut être éclairé dans une zone du plan de mesure,
- un équipement de détection (10) ayant au moins deux photodétecteurs (16) juxtaposés pour la détection de lumière de détection qui, lors de l'examen du document de valeur (1), en raison de l'éclairage par la source d'éclairage (18), émane du document de valeur dans une zone de détection (3) du plan de mesure (E), cependant que la lumière de détection du document de valeur peut être détectée par les photodétecteurs (16) dans au moins deux différentes plages spectrales,
- une optique collectrice (25), commune aux photodétecteurs (16), par laquelle la lumière de détection émise par le document de valeur dans la zone de détection (3) peut être collectée et collimatée de manière à former un faisceau de lumière (L), cependant que les photodétecteurs (16), vus le long de l'axe optique (a) du couloir de rayonnement de détection, sont agencés derrière l'optique collectrice (25),
**caractérisé en ce que**
- à chacun des photodétecteurs (16), une lentille de détecteur (26) est affectée, laquelle, vue le long de l'axe optique (a) du couloir de rayonnement de détection, est agencée derrière l'optique collectrice (25) et devant le photodétecteur (16) respectif, et
- les lentilles de détecteur sont juxtaposées de telle façon que chaque lentille de détecteur (26) capte un faisceau de lumière partielle (L') du faisceau de lumière (L) collimaté par l'optique collectrice (25) et le dirige sur le photodétecteur (16) respectif, de telle sorte que la zone de détection (3) dont la lumière de détection peut être détectée au même instant par les photodétecteurs (16) coïncide essentiellement pour les différents photodétecteurs, cependant que les axes optiques (b) des lentilles de détecteur (26) sont respectivement agencés de telle manière à l'extérieur de l'axe optique (a) du couloir de rayonnement de détection que le faisceau de lumière (L) collimaté est divisé latéralement par les lentilles de détecteur (26) en au moins deux faisceaux de lumière partielle (L'), cependant que les axes optiques (b) des lentilles de détecteur (26) présentent de préférence le même espacement latéral par rapport à l'axe optique (a) du couloir de rayonnement de détection, et
- au moins deux des photodétecteurs (16) de l'équipement de détection (10) sont décalés l'un par rapport à l'autre perpendiculairement à la direction de transport du document de valeur, mais sont agencés dans la même position vus le long de la direction de transport (xo).

2. Capteur selon la revendication 1, **caractérisé en ce que** l'optique collectrice (25) est agencée de telle façon que la lumière de détection du document de valeur émise depuis chaque endroit de détection (31, 32) de la zone de détection (3) est collimatée par l'optique collectrice (25) de manière à former un faisceau de lumière (L) consistant en des rayons de lumière parallèles entre eux.

3. Capteur selon une des revendications précédentes, **caractérisé en ce que** l'optique collectrice (25) et les lentilles de détecteur (26) sont agencées de telle façon relativement au plan de mesure (E) et de telle façon l'un par rapport à l'autre que les faisceaux de lumière partielle (L') qui émanent du même endroit de détection (31, 32) de la zone de détection (3) sont respectivement parallèles en eux-mêmes et parallèles entre eux dans la section entre l'optique collectrice (25) et la lentille de détecteur (26).

4. Capteur selon une des revendications précédentes, **caractérisé en ce que** l'optique collectrice (25) et les lentilles de détecteur (26) sont agencées de telle façon de manière peu espacée entre eux le long de l'axe optique (a) du couloir de rayonnement de détection que des erreurs dues au vignettage sont évitées.

5. Capteur selon une des revendications précédentes, **caractérisé en ce que** l'optique collectrice (25), les lentilles de détecteur (26) et les photodétecteurs (16) sont agencés de telle façon relativement au plan de mesure (E) que la zone de détection (3) est reproduite avec netteté sur les photodétecteurs (16), de préférence sur chacun des photodétecteurs (16).

6. Capteur selon une des revendications précédentes, **caractérisé en ce que** les photodétecteurs (16) sont agencés sur l'axe optique (b) de la lentille de détecteur (26) affectée au photodétecteur respectif.

7. Capteur selon une des revendications précédentes, **caractérisé en ce que** les photodétecteurs (16) sont commandés de telle façon par le capteur que les photodétecteurs détectent de manière temporellement synchrone les uns par rapport aux autres la lumière de détection de la zone de détection (3).

8. Capteur selon une des revendications précédentes, **caractérisé en ce que** les photodétecteurs (16) sont conçus pour détecter différentes parties spectrales de lumière luminescente du document de valeur.

9. Capteur selon une des revendications précédentes, **caractérisé en ce que**, aux photodétecteurs (16), différents filtres spectraux (17) sont affectés, lesquels sont respectivement agencés dans un couloir individuel de rayonnement de détection du photodétecteur (16).

10. Capteur selon une des revendications précédentes, **caractérisé en ce que** l'équipement de détection (10) comporte un photodétecteur (12) supplémentaire pour la détection de lumière de réflectance du document de valeur (1), ledit photodétecteur étant de préférence dirigé sur essentiellement la même zone de détection (3) que les photodétecteur (16) de l'équipement de détection (10) cités ci-dessus.

11. Capteur selon une des revendications précédentes, **caractérisé en ce que** les lentilles de détecteur (26) sont des lentilles distinctes réalisées séparément les unes des autres qui sont de préférence agencées de manière coplanaire les unes par rapport aux autres.

12. Capteur selon une des revendications précédentes, **caractérisé en ce que** l'équipement de détection (10) comporte au moins quatre des photodétecteurs (16) qui sont juxtaposés de telle façon qu'ils constituent un groupement bidimensionnel de photodétecteurs dont le point central se trouve dans l'axe optique (a) du couloir de rayonnement de détection.

13. Dispositif d'examen de documents de valeur ayant un ou plusieurs capteurs selon une des revendications précédentes.
